# EUROPÄISCHE PATENTSCHRIFT

(11) **EP 3 230 684 B1**
(45) Veröffentlichungstag und Bekanntmachung des Hinweises auf die Patenterteilung: **25.11.2020**
(21) Anmeldenummer: 15804828.0
(22) Anmeldetag: 07.12.2015
(51) Int. Cl.: G01B 9/02, G01B 11/24, G02B 21/00, G02B 21/24

(54) **TIEFENSCANNENDES MIKROSKOP UND VERFAHREN ZUM BETREIBEN EINES TIEFENSCANNENDEN MIKROSKOPS**
DEPTH-SCANNING MICROSCOPE AND METHOD FOR OPERATING A DEPTH-SCANNING MICROSCOPE
MICROSCOPE À BALAYAGE EN PROFONDEUR ET PROCÉDÉ POUR FAIRE FONCTIONNER UN MICROSCOPE À BALAYAGE EN PROFONDEUR

(30) Priorität: 08.12.2014 DE 102014118151
(43) Veröffentlichungstag der Anmeldung: 18.10.2017
(73) Patentinhaber: Universität Kassel, 34125 Kassel (DE)
(72) Erfinder: LEHMANN, Peter, 37085 Göttingen (DE); TERESCHENKO, Stanislav, 34134 Kassel (DE)
(74) Vertreter: Kleine, Hubertus
(86) Internationale Anmeldenummer: PCT/EP2015/078778
(87) Internationale Veröffentlichungsnummer: WO 2016/091783

(56) Entgegenhaltungen:
- US-A1- 2002 196 450
- US-A1- 2010 128 276
- US-A1- 2011 128 551
- US-A1- 2013 265 585
- OSAMI SASKI ET AL: "Sinusoidal phase modulating interferometry for surface profile measurement", APPLIED OPTICS, Bd. 25, Nr. 18, 15. September 1986 (1986-09-15), Seiten 3137-3140, XP055081322,
- JOANNA SCHMIT: "High-stability white-light interferometry with reference signal for real-time correction of scanning errors", OPTICAL ENGINEERING, Bd. 42, Nr. 1, 1. Januar 2003 (2003-01-01) , Seite 54, XP055049348, ISSN: 0091-3286, DOI: 10.1117/1.1523942

## Beschreibung

Die Erfindung betrifft ein tiefenscannendes Interferenzmikroskop zur Bestimmung einer Oberflächentopographie eines Messobjekts mit einer Lichtquelle zur Beleuchtung des Messobjekts und einem Referenzspiegel, wobei ein von der Lichtquelle ausgehender und von dem Messobjekt reflektierter Teilstrahl und ein ebenfalls von der Lichtquelle ausgehender und an dem Referenzspiegel reflektierter Teilstrahl sich auf einem Bildsensor überlagern und erfasst werden. Das Interferenzmikroskop umfasst weiter eine monochromatische Lichtquelle, wobei sich ein von der monochromatischen Lichtquelle ausgehender und von dem Messobjekt reflektierter Teilstrahl und ein ebenfalls von der monochromatischen Lichtquelle ausgehender und an dem Referenzspiegel reflektierter Teilstrahl auf einem Sensor überlagern. Weiter ist eine Verstelleinrichtung zum Verfahren von zumindest Teilen des Interferenzmikroskops und/oder des Messobjekts zur Variationen der Länge der von dem Messobjekt reflektierten Teilstrahlen vorhanden, sowie ein Antrieb zur periodischen Bewegung des Referenzspiegels entlang seiner optischen Achse. Die Erfindung betrifft weiterhin ein Verfahren zum Betreiben eines derartigen tiefenscannenden Interferenzmikroskops, wobei der Referenzspiegel während einer Bestimmung der Oberflächentopographie des Messobjekts periodisch entlang seiner optischen Achse bewegt wird.

Tiefenscannende Mikroskope ermöglichen eine dreidimensionale Erfassung der Oberflächenstruktur eines Messobjekts auf einer mikroskopischen Größenskala. Ein Beispiel eines tiefenscannenden Mikroskops ist ein Weißlicht-Interferenzmikroskop. Die Kombination von Weißlicht zur Beleuchtung des Messobjekts und einer interferometrischen Messmethode ermöglicht bei diesem Mikroskop eine von der Messfeldgröße und der numerischen Apertur eines zur Abbildung der reflektierten Strahlen auf dem Bildsensor verwendeten Objektivs unabhängige Höhen- bzw. Tiefenauflösung im Nanometer-Bereich.

Die Gewinnung der Tiefeninformation beim Weißlicht-Interferenzmikroskop beruht auf der Interferenz zwischen dem vom Objekt reflektierten Teilstrahl, auch Objektstrahl genannt, und dem vom Referenzspiegel reflektierten Teilstrahl, auch Referenzstrahl genannt.

Ein tiefenscannendes Interferenzmikroskop ist beispielsweise aus dem Artikel "Sinusoidal phase modulating interferometry for surface profile measurement", O. Sasaki und H. Okazaki, Applied Optics, Bd. 25, Nr. 18 (1986) Seiten 3137-3140, bekannt. In einem Arm des Interferometers ist ein periodisch entlang seiner optischen Achse schwingender Referenzspiegel angeordnet. Ein entstehendes 2-dimensionales Interferenzmuster wird zeitabhängig von einem Bildsensor erfasst, wobei eine Tiefeninformation aus der Zeitabhängigkeit des Bildsignals gewonnen wird.

Ohne weitere Maßnahmen ist ein tiefenscannendes Interferenzmikroskop, insbesondere ein Weißlicht-Interferenzmikroskop, sehr störanfällig im Hinblick auf Schwingungen und Vibrationen, die den Abstand zwischen Mikroskop und Messobjekt und somit den Gangunterschied beeinflussen. Auch Ungenauigkeiten, beispielsweise Nichtlinearitäten, beim Verfahren eines Messkopfs des Interferenzmikroskops bzw. des Messobjekts haben Messfehler in der Tiefenbestimmung zu Folge. Das Verfahren des Messkopfs des Interferenzmikroskops wird nachfolgend auch als Tiefenscan bezeichnet.

Die Messfehler können kompensiert werden, wenn während des Tiefenscans Informationen über die tatsächliche Abstandsänderung zwischen dem Messkopf des Interferenzmikroskops und dem Messobjekt vorliegen.

Zu diesem Zweck ist beispielsweise aus der Druckschrift US 6,624,894 B2 ein Verfahren bekannt, bei dem mit Hilfe der eingangs genannten monochromatischen Lichtquelle ein zweiter Strahlengang parallel in dem Interferenzmikroskop geführt wird, wobei ein ebenfalls am Messobjekt reflektierter Teilstrahl mit einem am Referenzspiegel reflektierten Teilstrahl zur Interferenz gebracht wird. Es wird so ein Referenzsignal gebildet, das bevorzugt auf einem separaten Sensor, beispielsweise einer Fotodiode, ausgewertet wird. Die Interferenz der monochromatischen Teilstrahlen wird verwendet, um die Bewegung des Messkopfs des Interferenzmikroskops gegenüber dem Messobjekt auszumessen und so Positionierungsungenauigkeiten beim Tiefenscan und in gewissen Maßen auch Schwingungen rechnerisch kompensieren zu können.

Auch die Druckschrift US 2002/0196450 A1 und der Artikel "High-stability white-light interferometry with reference signal for real-time correction of scanning errors", A. Olzak und J. Schmitt, Optical Engineering, Bd. 42, Nr. 1 (2003) Seiten 54-59 offenbaren derartige Korrekturverfahren. Die Druckschrift US 2010/0128276 A1 beschreibt eine Weiterbildung der Verfahren zur Bestimmung der Bewegung des Messkopfs. Es wird dabei ein Testobjekt parallel zum Messobjekt interferometrisch vermessen, um Positionierungsungenauigkeiten zu kompensieren.

In der Druckschrift US 2011/0128551 A1 wird ein alternatives Verfahren für ein tiefenscannendes Interferenzmikroskop beschrieben, bei dem die Verstelleinheit mit einer Bildfrequenz, mit der ein Bildsensor die Interferenzmuster aufnimmt, synchronisiert wird, um Positionierungsungenauigkeiten zu verringern.

Es zeigt sich jedoch, dass auf die genannten Arten nur monofrequente Störschwingungen zuverlässig kompensiert werden können. Insbesondere höherfrequente harmonische oder transiente Schwingungsanteile beeinträchtigen nach wie vor die Messgenauigkeit.

Es ist eine Aufgabe der vorliegenden Erfindung, ein tiefenscannendes Interferenzmikroskop der eingangs genannten Art und ein Betriebsverfahren für ein solches Interferenzmikroskop bereitzustellen, bei denen nicht nur monofrequente Schwingungen, sondern auch Schwingungen mit harmonischen und/oder transienten Schwingungsanteilen zuverlässig kompensiert werden können.

Diese Aufgabe wird gelöst durch ein tiefenscannendes Interferenzmikroskop und ein Betriebsverfahren für ein tiefenscannendes Interferenzmikroskop mit den jeweiligen Merkmalen der unabhängigen Ansprüche. Vorteilhafte Ausgestaltungen und Weiterbildungen sind Gegenstand der jeweiligen abhängigen Ansprüche.

Die Bewegung des Referenzspiegels ermöglicht eine Steigerung der Genauigkeit und der Wiederholfrequenz der Abstandsmessung zwischen dem Interferenzmikroskop und dem Messobjekt mit Hilfe der monochromatischen Lichtquelle.

Bei einer direkten Auswertung der Intensität des monochromatischen Interferenzsignals bei einer Bewegung des Messkopfs des Interferenzmikroskops ohne Bewegung des Referenzspiegels kann gemäß dem Stand der Technik eine Abstandsbestimmung beispielsweise anhand der Nulldurchgänge des Interferenzmusters erfolgen. Je nach verwendeter Wellenlänge des monochromatischen Lichts kann damit ein Abstandswert pro einigen hundert Nanometern bestimmt werden. Daraus resultiert eine ebenfalls eingeschränkte Wiederholfrequenz für die Abstandsmessung mit Hilfe der monochromatischen Lichtquelle, die abhängig von der Geschwindigkeit der Bewegung des Interferenzmikroskops beim Tiefenscan ist.

Aufgrund der Bewegung und insbesondere bei einer periodischen Bewegung des Referenzspiegels kann eine Abstandsmessung jedoch mit der doppelten Wiederholfrequenz der periodischen Bewegung durchgeführt werden. Der Abstand kann mit deutlich höherer zeitlicher und räumlicher Auflösung nachvollzogen werden, wodurch auch höherfrequente harmonische und/oder transiente Schwingungsanteile von mechanischen Störschwingungen erfasst und kompensiert werden können.

Besonders vorteilhaft kann das erfindungsgemäße Verfahren bei Weißlicht-Interferenzmikroskopen eingesetzt werden, da diese wegen ihrer hohen Tiefenauflösung in besonderem Maße empfindlich für Störschwingungen sind.

Ein jeweiliger Gangunterschied zwischen dem vom Messobjekt und vom Referenzspiegel reflektierten Teilstrahl ist bei beiden Lichtquellen im Wesentlichen gleich groß. Bei einem Weißlicht-Interferenzmikroskop wird Weißlicht zur Bildgebung verwendet, indem als Lichtquelle eine Weißlichtlichtquelle verwendet wird.

In einer vorteilhaften Ausgestaltung des tiefenscannenden Interferenzmikroskops ist der Antrieb ein Piezoantrieb oder ein Tauchspulenantrieb. Die periodische Bewegung des Referenzspiegels kann beispielsweise einen sinusförmigen oder einen sägezahnförmigen, vorzugsweise dreieckförmigen Verlauf aufweisen.

Erfindungsgemäß ist das tiefenscannende Interferenzmikroskop dazu eingerichtet, die Lichtquelle derart gepulst und synchronisiert mit der periodischen Bewegung des Referenzspiegels zu betreiben, dass Licht nur emittiert wird, wenn sich der Referenzspiegel im Bereich eines Umkehrpunkts seiner Bewegung befindet. Alternativ und/oder zusätzlich kann vorgesehen sein, den Bildsensor derart synchronisiert mit der periodischen Bewegung des Referenzspiegels zu betreiben, dass ein Bildsignal nur erfasst wird, wenn sich der Referenzspiegel im Bereich eines Umkehrpunkts seiner Bewegung befindet. Auf beide Arten wird ein Einfluss der Bewegung des Referenzspiegels auf die Bilder, beispielsweise die Weißlicht-Interferenzmuster, die der Bildsensor aufnimmt, verhindert.

In einer weiteren vorteilhaften Ausgestaltung des tiefenscannenden Interferenzmikroskops ist vor dem Bildsensor ein frequenzselektiver Filter angeordnet, der für Licht der monochromatischen Lichtquelle möglichst undurchlässig ist. Auch mit dieser Maßnahme kann eine Beeinflussung des Bilds auf dem Bildsensor verhindert oder zumindest verringert werden.

Analog wird bei einem erfindungsgemäßen Verfahren ein Bild, z.B. ein Weißlicht-Interferenzbild, nur dann erfasst, wenn sich der Referenzspiegel im Bereich eines Umkehrpunkts seiner Bewegung befindet. Dazu kann die Lichtquelle synchronisiert mit der Bewegung des Referenzspiegels gepulst betrieben werden und/oder der Bildsensor synchronisiert mit der Bewegung des Referenzspiegels betrieben werden bzw. seine bzw. Auswertung mit der Bewegung des Referenzspiegels vorgenommen werden.

Die Erfindung wird nachfolgend anhand von Ausführungsbeispielen mit Hilfe von Figuren näher erläutert. Die Figuren zeigen:
- Fig. 1: ein erstes Ausführungsbeispiel eines tiefenscannenden Interferenzmikroskops zur Messung eines Höhenprofils eines Messobjekts; und
- Fig. 2: ein zweites Ausführungsbeispiel eines tiefenscannenden Interferenzmikroskops zur Messung eines Höhenprofils eines Messobjekts.

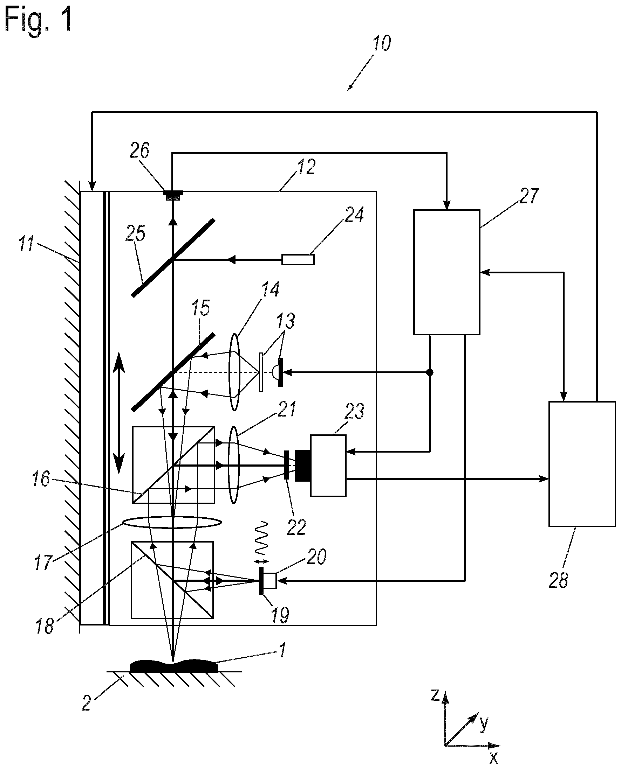

Fig. 1 zeigt ein erstes Ausführungsbeispiel eines tiefenscannenden Interferenzmikroskops in einer schematischen Schnittdarstellung. Der Schnitt ist entlang der optischen Achse ausgeführt. Als Beispiel eines tiefenscannenden Interferenzmikroskops ist vorliegend ein Weißlicht-Interferenzmikroskop dargestellt. Ein anmeldungsgemäßes tiefenscannendes Interferenzmikroskop kann jedoch auch beispielsweise als monochromatisches Interferenzmikroskop oder als phasenschiebendes Interferenzmikroskop oder -interferometer ausgebildet sein.

Ein Messobjekt 1, dessen laterale Höhenstruktur, auch Oberflächentopographie oder 2-dimensionales Höhenprofil genannt, von dem dargestellten Weißlicht-Interferenzmikroskop abgebildet werden soll, ist dabei auf einem hier nicht dargestellten Objektträger angeordnet, der zur Positionierung des Messobjekts und Auswahl eines vom Mikroskop darzustellenden Bereichs des Messobjekts bevorzugt als xy-Kreuztisch ausgebildet ist. Als xy-Ebene wird im Rahmen dieser Anmeldung die laterale Erstreckung des Messobjekts 1 bezeichnet. Gemessen wird die Höhenstruktur des Messobjekts 1 in einer zur xy-Ebene senkrechten z-Richtung. Gegebenenfalls kann auch eine Einstellmöglichkeit des Objektträgers zur Fokus-Grobeinstellung in z-Richtung bei dem Objektträger vorgesehen sein. Während der Messung positioniert der Objektträger das Messobjekt 1 in einer relativ zu einer festen Unterlage 2 fixierten Messposition.

In z-Richtung ist beabstandet vom Messobjekt 1 ein Messkopf 10 des Weißlicht-Interferenzmikroskops angeordnet. Der Messkopf 10 umfasst eine Verstelleinrichtung 11, mit der eine Reihe bewegter Komponenten 12 des Weißlicht-Interferenzmikroskops in z-Richtung verfahren werden können.

Im Hinblick auf seine optischen Komponenten umfasst das Weißlicht-Interferenzmikroskop eine Lichtquelle 13, die weißes Licht emittiert, beispielsweise eine Weißlicht-LED (Light Emitting Diode) mit einer vorgesetzten Streuscheibe. Die Lichtquelle 13 wird nachfolgend auch als Weißlichtquelle 13 bezeichnet. Das von der Weißlichtquelle 13 abgegebene Licht wird durch eine Linse 14 gebündelt auf einen in einem Winkel von 45° zur optischen Achse des Weißlicht-Interferenzmikroskops geneigten frequenzselektiven Spiegel 15, die in z-Richtung verläuft, nach unten in Richtung des Messobjekts 1 reflektiert. Das Licht durchläuft einen ersten Strahlteiler 16, ein Objektiv 17, die das Licht durch einen zweiten Strahlteiler 18 auf die Oberfläche des Messobjekts 1 fokussiert. Das Objektiv 17 weist im dargestellten Ausführungsbeispiel nur eine Fokussierlinse auf. Es versteht sich, dass das Objektiv 17 auch mehrere Linsen umfassen kann.

Ein Teil des von dem Objektiv 17 fokussierten Lichts wird von dem ebenfalls in einem Winkel von etwa 45° zur optischen Achse stehenden zweiten Strahlteiler 18 zur Seite ausgekoppelt und auf einen Referenzspiegel 19 reflektiert. Erfindungsgemäß ist der Referenzspiegel 19 auf einem Antrieb 20 montiert, der eine Bewegung des Referenzspiegels 19 in Richtung seiner optischen Achse, also senkrecht zu seiner Oberfläche ermöglicht. Dieses wird weiter unten detaillierter erläutert.

Das vom Referenzspiegel 19 reflektierte Licht wird von dem zweiten Strahlteiler 18 wiederum in Richtung der z-Achse reflektiert, wo es sich mit dem vom Messobjekt 1 reflektierten Licht überlagert. Die überlagerten vom Messobjekt 1 und vom Referenzspiegel 19 kommenden Strahlen werden am ersten Strahlteiler 16 zumindest teilweise zur Seite ausgekoppelt und über eine Linse 21 und einen frequenzselektiven Filter 22 auf einen Bildsensor 23 gelenkt.

Bei dem dargestellten Ausführungsbeispiel der Figur werden alle zuvor geschilderten optischen Komponenten des Weißlicht-Interferenzmikroskops von der Verstelleinrichtung 11 in z-Richtung bewegt. In alternativen Ausgestaltungen kann vorgesehen sein, dass zwar das Objektiv 17, der zweite Strahlteiler 18 und der Referenzspiegel 19 mit seinem Antrieb 20 zu den bewegten Komponenten 12 zählen, wohingegen die Weißlichtquelle 13 mit der Linse 14 und dem Spiegel 15 sowie der erste Strahlteiler 16, der frequenzselektive Filter 22 und der Bildsensor 23 in ihrer Position relativ zur Unterlage 2 unbeweglich sind. In einer weiteren Alternative kann auch das gesamte Weißlicht-Interferenzmikroskop relativ zur Unterlage 2 fest stehen und das Messobjekt 1 relativ dazu bewegt werden.

Das dargestellte Weißlicht-Interferenzmikroskop kann in bekannter Weise zur Aufnahme eines zweidimensionalen Interferenzmusters durch den Bildsensor 23, beispielsweise eine CCD (Charge Coupled Devise)-Kamera, eingesetzt werden, wobei jedem Bildelement (Pixel) des Bildsensors 23 ein Bereich auf dem Messobjekt 1 entspricht. Durch eine Variation der z-Position der bewegten Komponenten 12 durch die Verstelleinrichtung 11, die beispielsweise durch einen Piezo-Linearantrieb realisiert sein kann, wird das zweidimensionale Interferenzmuster moduliert, wobei in bekannter Weise aus den Maxima und Minima bei der Modulation des Interferenzmusters die Höhenstruktur der Oberfläche des Messobjekts 1 abgeleitet werden kann. Anstelle eines Piezo-Linearantriebs kann auch ein weniger präziser Antrieb, beispielsweise ein Schrittmotor-Antrieb eingesetzt werden. Wie nachfolgend erläutert wird, ist bei dem anmeldungsgemäßen Mikroskop ein integriertes Messsystem vorgesehen, durch das die tatsächliche Position der bewegten Komponenten 12 erfasst wird.

Bei dem Weißlicht-Interferenzmikroskop ist ein zweiter Strahlengang mit interferierenden Teilstrahlen vorgesehen, über den die Bewegung der bewegten Komponenten 12 des Messkopfs 10 relativ zum Messobjekt 1 vermessen werden kann. Zu diesem Zweck ist eine monochromatische Lichtquelle 24, beispielsweise ein Infrarotlichtlaser vorgesehen, der einen Lichtstrahl erzeugt, der über einen halbdurchlässigen Spiegel 25, der wiederum in einem Winkel von 45° zur optischen Achse steht und das Licht der monochromatischen Lichtquelle 24 in Richtung des Messobjekts 1 reflektiert. Der Strahl dringt durch den frequenzselektiven Spiegel 15 und verläuft dann im Wesentlichen parallel zu dem Weißlicht-Strahlengang.

Insbesondere erfährt auch der monochromatische Lichtstrahl eine Aufspaltung in zwei Teilstrahlen am zweiten Strahlteiler 18, wobei ein Teilstrahl auf das Messobjekt 1 trifft und dort reflektiert wird und ein Teilstrahl auf den Referenzspiegel 19 trifft und von dort reflektiert wird. Die beiden Teilstrahlen vereinigen sich und interferieren miteinander, wobei der überlagerte Strahl - anders als die Weißlicht-Strahlen - von dem frequenzselektiven Spiegel 15 durchgelassen wird, zumindest teilweise durch den halbdurchlässigen Spiegel 25 tritt und von einem Fotosensor 26 erfasst wird. Der Fotosensor 26 ist anders als der Bildsensor 23 lateral nicht ortsauflösend, sondern wird beispielsweise von einer einzelnen Fotodiode oder einem Fototransistor gebildet. Wie aus dem Stand der Technik bekannt ist, würde eine Beobachtung von Interferenz-Minima bzw. Maxima bei Bewegung der Verstelleinrichtung 11 es ermöglichen, die tatsächliche Bewegung der bewegten Komponenten 12 zumindest mit eingeschränkter Zeit- und Ortsauflösung nachzuvollziehen.

Erfindungsgemäß wird der Referenzspiegel 19 durch den Antrieb 20 in eine bevorzugt periodische Bewegung versetzt, beispielsweise in eine harmonische Schwingung oder in eine Dreieck- oder Sägezahnbewegung. Die Bewegung des Referenzspiegels 19 erfolgt dabei mit einer Frequenz, die bevorzugt um ein Vielfaches größer ist als die Bildaufnahmefrequenz des Bildsensors 23. Vorteilhafterweise ist die Frequenz der Bewegung des Referenzspiegels 19 auch größer als eine maximal zu erwartende Frequenz einer Störschwingung, beispielsweise einer Trittschallschwingung. Geeignete Frequenzen für die Bewegung des Referenzspiegels liegen im Bereich von einigen bis einigen zehn Kilohertz (kHz). Als Antrieb 20 kann beispielsweise ein Piezo-Antrieb oder ein elektromagnetischer Tauchspulenantrieb verwendet werden.

Durch die Bewegung des Referenzspiegels 19 wird in jeder Stellung der Versteileinrichtung 11 ein moduliertes Intensitätssignal am Fotosensor 26, nachfolgend auch Messsignal genannt, beobachtet. In der Phasenlage des modulierten Messsignals am Fotosensor 26, betrachtet relativ zur Phasenlage der Anregung der Bewegung des Referenzspiegels 19, spiegelt sich der Gangunterschied zwischen den vom Referenzspiegel 19 und vom Messobjekt 1 reflektierten Teilstrahlen wider. Die Auswertung des Signals am Fotosensor 26 ermöglicht damit die Ausgabe eines genauen Abstandswertes zu jedem Zeitpunkt mit einer Messwiederholfrequenz, die der doppelten Frequenz der Bewegung des Referenzspiegels 19 entspricht.

Bevorzugt können dabei Auswerteverfahren eingesetzt werden, bei denen die Phasenlage des Messsignals in jeder Halbperiode der Bewegung des Referenzspiegels mittels einer diskreten Fourier-Transformation bestimmt wird. Alternativ kann kontinuierlich ein um 90° zum Messsignal verschobenes Signal generiert wird. Dieses kann beispielsweise mithilfe einer Hilbert-Transformation erfolgen. Ein Vergleich des Messsignals mit dem um 90° phasenverschobenen Signal liefert zu jeder Zeit und in Echtzeit einen gemessenen Abstandswert.

Zur Ansteuerung des Antriebs 20 des Referenzspiegels 19 ist der Antrieb 20 mit einer Steuerung 27 verbunden. Die Steuerung 27 liest auch das vom Fotosensor 26 abgegebene Messsignal ein und synchronisiert diese beiden Werte miteinander. Die Steuerung 27 ist mit einem Auswerterechner 28 verbunden, der zudem die Verstelleinrichtung 11 ansteuert und die Bilddaten des Bildsensors 23 auswertet.

Um einen Einfluss der Bewegung des Referenzspiegels 19 auf die Weißlicht-Interferenzmuster des Bildsensors 23 zu verhindern, wird das Interferenzmuster bevorzugt nur dann aufgenommen, wenn sich der Referenzspiegel 19 im Bereich eines der Umkehrpunkte der Bewegung befindet. Dazu kann beispielsweise die Weißlichtquelle 13 angesteuert von der Steuerung 27 gepulst betrieben werden, sodass sie nur im Bereich der Umkehrpunkte des Referenzspiegels 19 Licht emittiert. Alternativ oder zusätzlich kann der Bildsensor 23 bzw. eine bei dem Bildsensor 23 vorgesehene Auswerteelektronik so angesteuert werden, dass Bildinformationen nur im Bereich des Umkehrpunkts des Referenzspiegels 19 erfasst werden.

Das Ausführungsbeispiel der Fig. 1 gibt ein Weißlicht-Interferometer vom Michelson-Typ wieder. Grundsätzlich kann das beschriebene Verfahren auch bei einem Weißlicht-Interferenzmikroskop nach dem Linnik- oder Mirau-Typ eingesetzt werden. Bei einem Mirau-Weißlicht-Interferenzmikroskop ist der Referenzspiegel in einem Mikroskopobjektiv integriert. Dabei ist es möglich, den üblicherweise starren Referenzspiegel bei einem derartigen Mikroskopobjektiv durch einen elektrisch angetriebenen und periodisch bewegbaren Referenzspiegel zu ersetzen.

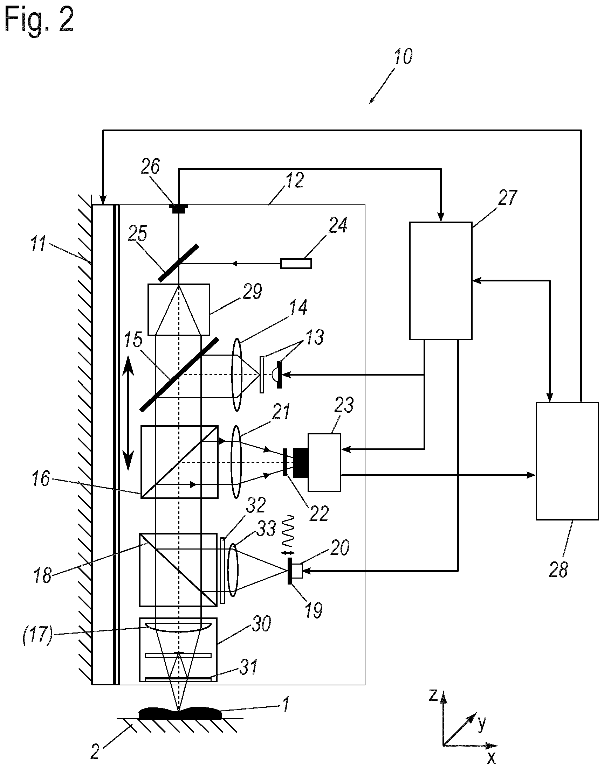

Eine alternative Möglichkeit, das anmeldungsgemäße Verfahren mit einem Mirau-Weißlicht-Interferenzmikroskop durchzuführen, ohne dass der interne Referenzspiegel zu periodischen Bewegungen angetrieben werden muss, ist im Ausführungsbeispiel der Fig. 2 dargestellt. In diesem Ausführungsbeispiel kennzeichnen gleiche Bezugszeichen gleiche oder gleichwertige Elemente wie bei dem Ausführungsbeispiel der Fig. 1.

Vom Grundaufbau entspricht das Mikroskop der Fig. 2 dem in Fig. 1 gezeigten. Auf die entsprechende Beschreibung wird hiermit explizit verwiesen.

Anstelle des Objektivs 17 wird ein Mirau-Objektiv 30 eingesetzt, das eine dem Objektiv 17 gemäß Fig. 1 entsprechende Linse aufweist, einen wellenlängenselektierenden Strahlteiler 31 sowie zwischen den beiden Elementen einen internen Referenzspiegel. Der wellenlängenselektierende Strahlteiler 31 arbeitet beispielsweise bis zu einer bestimmten Wellenlänge, z.B. 750 nm, als Strahlteiler, für größere Wellenlängen ist er jedoch im Wesentlichen transparent.

Als monochromatische Lichtquelle 24 wird eine Quelle mit einer Wellenlänge eingesetzt, die der wellenlängenselektierende Strahlteiler 31 transmittieren lässt, z.B. 800 nm. Für diese Wellenlänge der monochromatischen Lichtquelle 24 wirkt das Mirau-Objektiv 30 somit wie ein normales Auflichtobjektiv, wohingegen es für den sichtbaren Teil des Lichts der Weißlichtquelle 13 als Interferenz-Objektiv wirkt.

Der Strahlteiler 18, der Licht in den Referenzarm mit dem bewegten Referenzspiegel 19 auskoppelt, wirkt demgegenüber bevorzugt für die größeren Wellenlängen (im genannten Beispiel ab 750 nm) strahlteilend, hingegen für Wellenlängen, die kürzer als die genannte bestimmte Wellenlänge sind, nicht. Somit wird von diesem Strahlteiler 18 nur das Licht der monochromatischen Lichtquelle 24 auf den bewegten Referenzspiegel 19 gelenkt.

Zwischen dem Strahlteiler 18 und dem bewegten Referenzspiegel 19 ist ein Filter 32 angeordnet, der wiederum nur das Licht der monochromatischen Lichtquelle 24 passieren lässt und sichtbares Licht (VIS-visible) der Weißlichtquelle 32 blockt (VIS-Sperrfilter). Der Filter 32 kann optional zusätzlich zu dem wellenlängenselektierenden Strahlteiler 18 eingesetzt werden, wie es in dem Beispiel dargestellt ist. Alternativ kann auch ein nicht wellenlängenlängenselektierender Strahlteiler 18 eingesetzt werden. In dem Fall ist der Filter 32 zwingend vorzusehen und übernimmt dann vollständig die Selektion des Lichts der monochromatischen Lichtquelle 24, das zum bewegten Referenzspiegel 19 geleitet wird. Bei Verwendung des wellenlängenselektierenden Strahlteilers 18 ergibt sich für das Mikroskop jedoch vorteilhaft eine erhöhte Lichteffizienz, da der sichtbare Teil des Lichts der Weißlichtquelle 13 den Strahlteiler 18 ungehindert passieren kann.

Wegen der geänderten Geometrie des Strahlengangs durch Verwendung des Mirau-Objektivs 30 wird zudem eine Linse 33 verwendet, um Licht auf den Referenzspiegel 19 zu fokussieren. Weiter ist im Strahlengang ein Strahlaufweiter 29 angeordnet, um entlang der optischen Achse innerhalb des Mikroskops ein paralleles Strahlenbündel zu formen.

Bei dem Aufbau gemäß Fig. 2 erfolgt somit eine Trennung des (sichtbaren Teils) des bildgebenden Weißlichts und des monochromatischen Lichts des Referenzstrahls über deren Wellenlänge. Das Weißlicht der Weißlichtquelle 13 interferiert an dem internen Referenzspiegel im Mirau-Objektiv 30, das Licht der monochromatischen Lichtquelle 24 an dem bewegten Referenzspiegel 19. Ein Einfluss der Bewegung des Referenzspiegels 19 auf die Weißlicht-Interferenzmuster des Bildsensors 23 ist bei diesem Ausführungsbeispiel durch diese Trennung verhindert.

Wie bei dem Ausführungsbeispiel der Fig. 1 ermöglicht die Auswertung des Signals am Fotosensor 26 damit die Ausgabe eines genauen (relativen) Abstandswertes der bewegten Komponenten 12 des Mikroskops zum Messobjekt 1 zu jedem Zeitpunkt mit einer Messwiederholfrequenz, die der doppelten Frequenz der Bewegung des Referenzspiegels 19 entspricht.

### Bezugszeichenliste

- 1: Messobjekt
- 2: Unterlagen

- 10: Messkopf
- 11: Verstelleinrichtung
- 12: bewegte Komponenten
- 13: Weißlichtquelle
- 14: Linse
- 15: frequenzselektiver Spiegel
- 16: erster Strahlteiler
- 17: Objektiv
- 18: zweiter Strahlteiler
- 19: Referenzspiegel
- 20: Antrieb
- 21: Linse
- 22: frequenzselektiver Filter
- 23: Bildsensor
- 24: monochromatische Lichtquelle
- 25: halbdurchlässiger Spiegel
- 26: Fotosensor
- 27: Steuerung
- 28: Auswerterechner
- 29: Strahlaufweiter
- 30: Mirau-Objektiv
- 31: wellenlängenselektierender Strahlteiler
- 32: Filter (VIS-Sperrfilter)
- 33: Linse

## Patentansprüche

1. Tiefenscannendes Interferenzmikroskop zur Bestimmung einer Oberflächentopographie eines Messobjekts (1), mit
- einer Lichtquelle (13) zur Beleuchtung des Messobjekts (1), einem Referenzspiegel (19) und einem Bildsensor (23), wobei ein von der Lichtquelle (13) ausgehender und von dem Messobjekt (1) reflektierter Teilstrahl und ein ebenfalls von der Lichtquelle (13) ausgehender und an dem Referenzspiegel (19) reflektierter Teilstrahl sich auf dem Bildsensor (23) überlagern und erfasst werden,
- einer monochromatischen Lichtquelle (24) und einem Fotosensor (26), wobei sich ein von der monochromatischen Lichtquelle (24) ausgehender und von dem Messobjekt (1) reflektierter Teilstrahl und ein ebenfalls von der monochromatischen Lichtquelle (24) ausgehender und an dem Referenzspiegel (19) reflektierter Teilstrahl auf dem Fotosensor (26) überlagern, und
- einer Verstelleinrichtung zum Verfahren von zumindest Teilen des Interferenzmikroskops und/oder des Messobjekts (1) zur Variation der Länge der von dem Messobjekt (1) reflektierten Teilstrahlen,
wobei ein Antrieb (20) zur periodischen Bewegung des Referenzspiegels (19) entlang seiner optischen Achse vorhanden ist,
**dadurch gekennzeichnet,**
**dass** das tiefenscannende Interferenzmikroskop eine Steuerung (27) aufweist, die dazu eingerichtet ist, die Lichtquelle (13) derart gepulst und synchronisiert mit der periodischen Bewegung des Referenzspiegels (19) zu betreiben, dass Licht nur emittiert wird, wenn sich der Referenzspiegel (19) im Bereich eines Umkehrpunkts seiner Bewegung befindet, und/oder die dazu eingerichtet ist, den Bildsensor (23) derart synchronisiert mit der periodischen Bewegung des Referenzspiegels (19) zu betreiben, dass ein Bildsignal nur erfasst wird, wenn sich der Referenzspiegel (19) im Bereich eines Umkehrpunkts seiner Bewegung befindet.

2. Tiefenscannendes Interferenzmikroskop nach Anspruch 1, wobei ein jeweiliger Gangunterschied zwischen dem vom Messobjekt (1) und vom Referenzspiegel (19) reflektierten Teilstrahl bei beiden Lichtquellen (13, 24) im Wesentlichen gleich groß ist.

3. Tiefenscannendes Interferenzmikroskop nach Anspruch 2, ausgebildet als Weißlicht-Interferenzmikroskop, bei dem die Lichtquelle (13) eine Weißlichtlichtquelle ist.

4. Tiefenscannendes Interferenzmikroskop nach einem der Ansprüche 1 bis 3, bei dem der Antrieb (20) ein Piezoantrieb oder ein Tauchspulenantrieb ist.

5. Tiefenscannendes Interferenzmikroskop nach einem der Ansprüche 1 bis 4, bei dem die periodische Bewegung des Referenzspiegels (19) einen sinusförmigen oder einen sägezahnförmigen, vorzugsweise dreieckförmigen Verlauf aufweist.

6. Tiefenscannendes Interferenzmikroskop nach einem der Ansprüche 1 bis 5, bei dem vor dem Bildsensor (23) ein frequenzselektiver Filter (22) angeordnet ist, der für Licht der monochromatischen Lichtquelle (24) möglichst undurchlässig ist.

7. Verfahren zum Betreiben eines tiefenscannenden Interferenzmikroskops zur Bestimmung einer Oberflächentopographie eines Messobjekts (1), mit
- einer Lichtquelle (13) zur Beleuchtung des Messobjekts (1), wobei ein von der Lichtquelle (13) ausgehender und dem Messobjekt (1) reflektierter Teilstrahl und ein ebenfalls von der Lichtquelle (13) ausgehender und an einem Referenzspiegel (19) reflektierter Teilstrahl sich auf einem Bildsensor (23) überlagern und erfasst werden, und
- einer monochromatischen Lichtquelle (24), wobei sich ein von der monochromatischen Lichtquelle (24) ausgehender und von dem Messobjekt (1) reflektierter Teilstrahl und ein ebenfalls von der monochromatischen Lichtquelle (24) ausgehender und an dem Referenzspiegel (19) reflektierter Teilstrahl auf einem Fotosensor (26) überlagern, und
- einer Verstelleinrichtung zum Verfahren von zumindest Teilen des Weißlicht-Interferenzmikroskops und/oder des Messobjekts (1) zur Variation der Länge der von dem Messobjekt (1) reflektierten Teilstrahlen,
wobei der Referenzspiegel (19) während einer Bestimmung der Oberflächentopographie des Messobjekts (1) periodisch entlang seiner optischen Achse bewegt wird, **dadurch gekennzeichnet, dass** von dem Bildsensor (23) ein Bild nur dann erfasst wird, wenn sich der Referenzspiegel (19) im Bereich eines Umkehrpunkts seiner Bewegung befindet.

8. Verfahren nach Anspruch 7 zum Betreiben des tiefenscannenden Interferenzmikroskops, wobei
- ein jeweiliger Gangunterschied zwischen dem vom Messobjekt (1) und vom Referenzspiegel (19) reflektierten Teilstrahl bei beiden Lichtquellen (13, 24) im Wesentlichen gleich groß ist, und
- der jeweilige Gangunterschied sowohl durch die Bewegung des Referenzspiegels (19) als auch durch das Verfahren des Mikroskops und/oder des Messobjekts (1) variiert wird.

9. Verfahren nach Anspruch 8 zum Betreiben des tiefenscannenden Interferenzmikroskops als Weißlicht-Interferenzmikroskop, wobei die Lichtquelle (13) Weißlicht emittiert.

10. Verfahren nach einem der Ansprüche 7 bis 9, bei dem die Lichtquelle (13) synchronisiert mit der Bewegung des Referenzspiegels (19) gepulst betrieben wird.

11. Verfahren nach einem der Ansprüche 7 bis 10, bei dem der Bildsensor (23) synchronisiert mit der Bewegung des Referenzspiegels (19) betrieben wird.

## Claims

1. Depth-scanning interference microscope for determining a surface topography of a measurement object (1), comprising
- a light source (13) for illuminating the measurement object (1), a reference mirror (19) and an image sensor (23), wherein a partial beam originating from the light source (13) and reflected by the measurement object (1) and a partial beam likewise originating from the light source (13) and reflected at the reference mirror (19) are superposed on the image sensor (23) and are detected,
- a monochromatic light source (24) and a photosensor (26), wherein a partial beam originating from the monochromatic light source (24) and reflected by the measurement object (1) and a partial beam likewise originating from the monochromatic light source (24) and reflected at the reference mirror (19) are superposed on the photosensor (26), and
- an adjustment device for displacing at least parts of the interference microscope and/or of the measurement object (1) in order to vary the length of the partial beams reflected by the measurement object (1),
wherein a drive (20) is provided for periodically moving the reference mirror (19) along its optical axis,
**characterized**
**in that** the depth-scanning interference microscope has a controller (27) which is designed to operate the light source (13) in a pulsed manner and in synchronism with the periodic movement of the reference mirror (19) such that light is emitted only when the reference mirror (19) is in the region of a point of reversal of its movement, and/or which is designed to operate the image sensor (23) in synchronism with the periodic movement of the reference mirror (19) such that an image signal is detected only when the reference mirror (19) is in the region of a point of reversal of its movement.

2. Depth-scanning interference microscope according to claim 1, wherein a respective path difference between the partial beam reflected by the measurement object (1) and the partial beam reflected by the reference mirror (19) is substantially of equal size for both light sources (13, 24).

3. Depth-scanning interference microscope according to claim 2, designed as a white-light interference microscope, in which the light source (13) is a white-light light source.

4. Depth-scanning interference microscope according to any one of claims 1 to 3, in which the drive (20) is a piezo drive or a moving coil drive.

5. Depth-scanning interference microscope according to any one of claims 1 to 4, in which the periodic movement of the reference mirror (19) has a sinusoidal or a sawtooth-shaped, preferably triangular profile.

6. Depth-scanning interference microscope according to any one of claims 1 to 5, in which a frequency-selective filter (22), which is as impervious as possible to light from the monochromatic light source (24), is arranged in front of the image sensor (23).

7. Method for operating a depth-scanning interference microscope for determining a surface topography of a measurement object (1), comprising
- a light source (13) for illuminating the measurement object (1), wherein a partial beam originating from the light source (13) and reflected by the measurement object (1) and a partial beam likewise originating from the light source (13) and reflected at a reference mirror (19) are superposed on an image sensor (23) and are detected, and
- a monochromatic light source (24), wherein a partial beam originating from the monochromatic light source (24) and reflected by the measurement object (1) and a partial beam likewise originating from the monochromatic light source (24) and reflected at the reference mirror (19) are superposed on a photosensor (26), and
- an adjustment device for displacing at least parts of the white-light interference microscope and/or of the measurement object (1) in order to vary the length of the partial beams reflected by the measurement object (1),
wherein the reference mirror (19) is periodically moved along its optical axis while the surface topography of the measurement object (1) is being determined, **characterized in that** an image is captured by the image sensor (23) only when the reference mirror (19) is in the region of a point of reversal of its movement.

8. Method according to claim 7 for operating the depth-scanning interference microscope, wherein
- a respective path difference between the partial beam reflected by the measurement object (1) and the partial beam reflected by the reference mirror (19) is substantially of equal size for both light sources (13, 24), and
- the respective path difference is varied both by the movement of the reference mirror (19) and by the displacement of the microscope and/or of the measurement object (1).

9. Method according to claim 8 for operating the depth-scanning interference microscope as a white-light interference microscope, wherein the light source (13) emits white light.

10. Method according to any one of claims 7 to 9, in which the light source (13) is operated in a pulsed manner and in synchronism with the movement of the reference mirror (19).

11. Method according to any one of claims 7 to 10, in which the image sensor (23) is operated in synchronism with the movement of the reference mirror (19).

## Revendications

1. Microscope interférentiel à balayage en profondeur pour déterminer une topographie de surface d'un objet de mesure (1), comprenant
- une source de lumière (13) pour éclairer l'objet de mesure (1), un miroir de référence (19) et un capteur d'image (23), dans lequel un rayon partiel émis par la source de lumière (13) et réfléchi par l'objet de mesure (1) et un rayon partiel également émis par la source de lumière (13) et réfléchi sur le miroir de référence (19) se superposent sur le capteur d'image (23) et y sont détectés,
- une source de lumière monochromatique (24) et un photodétecteur (26), dans lequel un faisceau partiel émis par la source de lumière monochromatique (24) et réfléchi par l'objet de mesure (1) et un faisceau partiel également émis par la source de lumière monochromatique (24) et réfléchi sur le miroir de référence (19) se superposent sur le photodétecteur (26), et
- un dispositif de réglage pour déplacer au moins des parties du microscope interférentiel et/ou de l'objet de mesure (1) pour faire varier la longueur des rayons partiels réfléchis par l'objet de mesure (1),
dans lequel un entraînement (20) est prévu pour déplacer périodiquement le miroir de référence (19) le long de son axe optique,
**caractérisé en ce**
**que** le microscope interférentiel à balayage en profondeur présente une commande (27) qui est conçue pour actionner la source de lumière (13) de manière pulsée et synchronisée avec le déplacement périodique du miroir de référence (19) de telle sorte qu'une lumière ne soit émise que lorsque le miroir de référence (19) se trouve dans la zone d'un point d'inversion de son déplacement, et/ou qui est conçue pour actionner le capteur d'image (23) de manière synchronisée avec le déplacement périodique du miroir de référence (19) de telle sorte qu'un signal d'image ne soit détecté que lorsque le miroir de référence (19) se trouve dans la zone d'un point d'inversion de son déplacement.

2. Microscope interférentiel à balayage en profondeur selon la revendication 1, dans lequel une différence de trajet entre le faisceau partiel réfléchi par l'objet de mesure (1) et celui réfléchi par le miroir de référence (19) est sensiblement égale pour les deux sources de lumière (13, 24).

3. Microscope interférentiel à balayage en profondeur selon la revendication 2, réalisé sous la forme d'un microscope interférentiel à lumière blanche dans lequel la source de lumière (13) est une source de lumière blanche.

4. Microscope interférentiel à balayage en profondeur selon l'une des revendications 1 à 3, dans lequel l'entraînement (20) est un entraînement piézoélectrique ou un entraînement à bobine mobile.

5. Microscope interférentiel à balayage en profondeur selon l'une des revendications 1 à 4, dans lequel le déplacement périodique du miroir de référence (19) présente une allure sinusoïdale ou en dents de scie, de préférence triangulaire.

6. Microscope interférentiel à balayage en profondeur selon l'une des revendications 1 à 5, dans lequel devant le capteur d'image (23) est disposé un filtre sélectif en fréquence (22) qui est le plus opaque possible à la lumière provenant de la source de lumière monochromatique (24).

7. Procédé pour faire fonctionner un microscope interférentiel à balayage en profondeur pour déterminer une topographie de surface d'un objet de mesure (1), comprenant
- une source de lumière (13) pour éclairer l'objet de mesure (1), dans lequel un rayon partiel émis par la source de lumière (13) et réfléchi par l'objet de mesure (1) et un rayon partiel également émis par la source de lumière (13) et réfléchi sur un miroir de référence (19) se superposent sur un capteur d'image (23) et y sont détectés,
- une source de lumière monochromatique (24), dans lequel un faisceau partiel émis par la source de lumière monochromatique (24) et réfléchi par l'objet de mesure (1) et un faisceau partiel également émis par la source de lumière monochromatique (24) et réfléchi sur le miroir de référence (19) se superposent sur un photodétecteur (26), et
- un dispositif de réglage pour déplacer au moins des parties du microscope interférentiel à lumière blanche et/ou de l'objet de mesure (1) pour faire varier la longueur des rayons partiels réfléchis par l'objet de mesure (1),
dans lequel le miroir de référence (19) est déplacé périodiquement le long de son axe optique pendant une détermination de la topographie de surface de l'objet de mesure (1), **caractérisé en ce qu'**une image n'est détectée par le capteur d'image (23) que lorsque le miroir de référence (19) se trouve dans la zone d'un point d'inversion de son déplacement.

8. Procédé selon la revendication 7 pour faire fonctionner le microscope interférentiel à balayage en profondeur, dans lequel
- une différence de trajet entre le faisceau partiel réfléchi par l'objet de mesure (1) et celui réfléchi par le miroir de référence (19) est sensiblement égale pour les deux sources de lumière (13, 24), et
- on fait varier la différence de trajet respective aussi bien par le déplacement du miroir de référence (19) que par le déplacement du microscope et/ou de l'objet de mesure (1) .

9. Procédé selon la revendication 8 pour faire fonctionner le microscope interférentiel à balayage en profondeur sous la forme d'un microscope interférentiel à lumière blanche, dans lequel la source de lumière (13) émet une lumière blanche.

10. Procédé selon l'une des revendications 7 à 9, dans lequel la source de lumière (13) est actionnée de manière pulsée et synchronisée avec le déplacement du miroir de référence (19).

11. Procédé selon l'une des revendications 7 à 10, dans lequel le capteur d'image (23) est actionné de manière synchronisée avec le déplacement du miroir de référence (19).
